# NOUVEAU FASCICULE DE BREVET EUROPEEN

(11) **EP 2 435 377 B2**
(45) Date de publication et mention de la décision concernant l'opposition: **26.03.2025**
(45) Mention de la délivrance du brevet: 14.07.2021
(21) Numéro de dépôt: 10728836.7
(22) Date de dépôt: 28.05.2010
(51) Int. Cl.: C03C 3/087, C03C 4/08, C03C 4/10, C03C 10/00, C03C 3/085, C03C 10/12

(54) **PLAQUE EN VITROCÉRAMIQUE**
GLASKERAMIKPLATTE
GLASS-CERAMIC PLATE

(30) Priorité: 29.05.2009 FR 0953558; 03.07.2009 FR 0954620; 01.04.2010 FR 1052474
(43) Date de publication de la demande: 04.04.2012
(73) Titulaire: Eurokera S.N.C., 77640 Jouarre (FR)
(72) Inventeur: BRUNET, Edouard, F-75012 Paris (FR); CHOPINET, Marie, Hélène, F-75018 Paris (FR)
(74) Mandataire: Saint-Gobain Recherche
(86) Numéro de dépôt international: PCT/FR2010/051028
(87) Numéro de publication internationale: WO 2010/136731

(56) Documents cités:
- EP-A2- 1 465 460
- EP-A2- 1 465 460
- EP-A2- 2 226 303
- WO-A2-2008/053110
- WO-A2-2010/040443
- WO-A2-2010/040443
- WO-A2-2010/137000
- DE-A1- 102004 024 583
- DE-A1- 102008 050 263
- DE-B3- 102008 001 708
- FR-A1- 2 612 510
- FR-A1- 2 902 420
- FR-A1- 2 955 400
- GB-A- 1 124 001
- JP-A- H11 100 229
- JP-A- H11 100 229
- JP-A- H11 100 230
- JP-A- H11 100 230
- JP-A- H11 100 231
- JP-A- H11 100 231
- JP-B1- S4 516 114
- US-A- 3 788 865
- US-A- 4 461 839
- US-A1- 2004 121 895
- US-A1- 2004 121 895
- US-A1- 2004 157 720
- US-A1- 2005 252 503
- US-A1- 2007 004 578
- US-A1- 2007 213 192
- US-A1- 2008 026 927
- US-A1- 2008 207 424
- US-A1- 2008 207 424
- US-A1- 2010 069 219
- Acte notarié de remise du texte de la demande D1a aux fins d’annonce publique le 30.03.2009
- Analyse chimique
- Tableau des valeurs de transmission
- Spectres de transmission
- Chemische Analyse
- Kristallphasenanalyse
- Transmissionswertetabelle

## Description

L'invention concerne le domaine des vitrocéramiques.

Elle se rapporte plus précisément à une plaque en vitrocéramique du type aluminosilicate de lithium.

De telles vitrocéramiques sont destinées notamment à être utilisées comme articles de cuisine, en particulier en tant que plaques de cuisson recouvrant des éléments chauffants tels que des foyers halogènes ou radiants, ou en tant qu'ustensiles de cuisson.

Si les vitrocéramiques du type aluminosilicate de lithium se révèlent être bien adaptées à ces utilisations, c'est grâce à leur aspect esthétique que l'on peut faire varier dans une large mesure, à leurs propriétés mécaniques, notamment à la résistance au chocs importante du fait de leur faible coefficient d'expansion thermique dans la gamme des températures d'utilisation, et à leurs propriétés chimiques de résistance aux acides comme aux bases.

De manière classique, la production de vitrocéramique s'effectue en plusieurs étapes : a) fusion des matières premières vitrifiables contenant au moins un agent de nucléation ; b) formage et refroidissement du verre - appelé « verre-mère » - à une température plus basse que son domaine de transformation ; c) traitement thermique de céramisation du verre.

Ce traitement thermique, appelé « céramisation », permet de faire croître au sein du verre des cristaux de structure β-quartz ou β-spodumène (selon la température de céramisation), qui ont la particularité de posséder des coefficients de dilatation thermique négatifs.

La présence, dans la vitrocéramique finale, de tels cristaux et d'une phase vitreuse résiduelle, permet d'obtenir un coefficient de dilatation thermique globalement nul ou très faible (la valeur absolue du coefficient de dilatation est typiquement inférieure ou égale à 15.10⁻⁷/°C, voire 5.10⁻⁷/°C). La taille des cristaux de structure β-quartz est généralement très faible de manière à ne pas diffuser la lumière visible.

Les vitrocéramiques possèdent en outre des propriétés optiques spécifiques qui dépendent de leur usage. Ainsi, dans le cas d'une plaque de cuisson, il est important que la vitrocéramique présente une faible aptitude à transmettre la lumière afin que l'utilisateur ne puisse pas, ou difficilement, distinguer les éléments chauffants sous-jacents quand ils ne fonctionnent pas. Mais dans le même temps, la plaque de cuisson doit permettre de visualiser les éléments lorsqu'ils chauffent, sans toutefois éblouir l'utilisateur, de manière à réduire le risque de brûlures au contact de la plaque chaude. La vitrocéramique doit encore présenter de bonnes propriétés de transmission énergétique, en particulier du rayonnement infrarouge produit par les éléments chauffants pour permettre que les aliments soient portés à la température désirée en un laps de temps le plus faible possible.

Les plaques de cuisson actuelles sont généralement colorées à l'aide d'oxyde de vanadium, voir par exemple les documents US2005/0252503 A1, JP11100230 A et JP11100231 A. L'oxyde de vanadium est ajouté aux matières premières du verre-mère avant la fusion, et il confère après céramisation une teinte orange-brune très soutenue, liée à une réduction du vanadium.

Ces vitrocéramiques colorées à l'oxyde de vanadium laissent passer les longueurs d'ondes situées dans le rouge (au-delà de 600 nm), de sorte que les éléments chauffants sont visibles lorsqu'ils sont portés à haute température. Les affichages réalisés à l'aide de diodes électroluminescentes émettant dans le rouge sont également visibles au travers de la plaque de cuisson.

Pour des raisons esthétiques il est récemment apparu un besoin de pouvoir également visualiser des affichages de couleurs différentes, notamment le bleu.

La demande EP-A-1 465 460 cherche à résoudre ce problème en proposant des vitrocéramiques dont la transmission lumineuse Y, intégrée sur tout le spectre du visible, est supérieure ou égale à 2,5%, et peut aller jusqu'à 15%, pour une épaisseur de 3 mm.

Cette solution n'est toutefois pas dénuée d'inconvénients car des transmissions aussi élevées entraînent la possibilité de voir la présence des éléments chauffants sous-jacents même en dehors de tout chauffage. En outre, la demande susmentionnée préconise l'utilisation d'un verre-mère oxydé afin de réduire la coloration due à l'oxyde de vanadium. Il est toutefois apparu aux inventeurs qu'en procédant de la sorte, l'oxyde de vanadium n'est pas totalement réduit durant l'étape de céramisation, et qu'il continue à se réduire au fil de l'utilisation de la plaque de cuisson, du fait des températures élevées subies par la plaque. Il en résulte un phénomène de vieillissement durant lequel la plaque s'assombrit progressivement. En outre, les compositions proposées contiennent de l'arsenic et/ou de l'antimoine, ce qui pose des problèmes de toxicité.

L'invention a pour but d'obvier à ces inconvénients en proposant un procédé d'obtention d'une plaque en vitrocéramique selon la revendication 1 et une plaque en vitrocéramique selon la revendication 4.

La plaque selon l'invention est notamment une plaque de cuisson, destinée à être intégrée dans une table de cuisson, cette dernière comprenant la plaque de cuisson et les éléments chauffants, par exemple des foyers radiants ou halogènes ou des éléments d'induction. La table de cuisson comprend de préférence des afficheurs à base de diodes électroluminescentes, notamment émettant dans le bleu.

La transmission optique pour une épaisseur de 4 mm est comprise entre 0,4 et 1,5% pour toute longueur d'onde comprise entre 400 et 500 nm.

De cette manière il est possible non seulement de visualiser des affichages réalisés à l'aide de diodes électroluminescentes bleues ou vertes, mais également de les visualiser sans distorsion majeure de leur couleur. Pour éviter toute distorsion, il est préférable d'avoir un spectre de transmission relativement plat entre 450 et 500 nm. La différence entre la transmission la plus élevée et la transmission la plus faible dans le domaine de longueurs d'ondes allant de 450 à 500 nm est avantageusement inférieure ou égale à 0,5%, voire 0,2% et même 0,1%.

De plus fortes transmissions entraîneraient la visualisation des éléments chauffants même hors période de chauffe, ce qui est à exclure. Pour de plus faibles transmissions en revanche, la visibilité des affichages bleus ou verts est trop faible.

La transmission lumineuse au sens de la norme ISO 9050 :2003 est de préférence inférieure ou égale à 3%, voire à 2% et même à 1% pour une plaque de 4 mm d'épaisseur. De la sorte, les éléments chauffants ne sont pas visibles lorsqu'ils sont éteints.

On entend par transmission la transmission totale, tenant compte à la fois de la transmission directe et de l'éventuelle transmission diffuse. On utilise donc de préférence un spectrophotomètre muni d'une sphère intégrante. Dans le cas d'une plaque vitrocéramique possédant des reliefs périodiques (notamment des picots) sur au moins une face, l'épaisseur de la plaque prend en compte ces reliefs. La transmission mesurée à une épaisseur donnée est ensuite convertie à l'épaisseur de référence de 4 mm selon les méthodes connues de l'homme du métier, incluses notamment dans la norme ISO 9050 :2003.

Par vitrocéramique du type aluminosilicate de lithium, on entend une vitrocéramique qui comprend les constituants suivants dans les limites définies ci-après exprimées en pourcentages pondéraux :

| | |
|---|---|
| SiO2 | 64-70 % |
| Al2 O3 | 18 - 19,8 % |
| Li2 O | 2,5 - 3,8 % |
| K2 O | 0 - <1,0 % |
| Na2 O | 0 - <1,0 % |
| ZnO | 1,2-2,8 % |
| MgO | 0,55-1,5 % |
| CaO | 0 - 1% |
| BaO | 0 - 3 % |
| SrO | 0 - 1,4 % |
| TiO2 | 1,8 - 3,2 % |
| ZrO2 | 1,0-2,5 % |
| P2 O5 | 0 - 8 % |

Cette vitrocéramique peut comprendre jusqu'à 1 % en poids de constituants non essentiels qui n'affectent pas la fusion du verre-mère ou la dévitrification ultérieure conduisant à la vitrocéramique.

La teneur en oxyde de baryum est de préférence comprise entre 1 et 3%, notamment entre 2 et 3% afin de diminuer la viscosité du verre. Pour la même raison, la teneur en silice est de préférence inférieure ou égale à 68%, notamment 67% voire même 66%. Les inventeurs ont également pu mettre en évidence un très fort effet de la teneur en chaux (CaO) sur la diminution de la viscosité, même pour de très faibles teneurs ajoutées. Pour cette raison, la teneur en CaO est d'au moins 0,2%, notamment 0,3% et même 0,4%.

Les meilleurs résultats sont obtenus pour des teneurs en alumine (Al₂O₃) inférieures ou égales à 19,5%, notamment 19%.

La composition chimique de la plaque selon l'invention comprend de l'oxyde de vanadium en une teneur pondérale comprise entre 0,01 et 0,03% ou encore 0,025 ou 0,02%. Les teneurs préférées en oxyde de vanadium sont comprises entre 0,01 et 0,03%.

De fortes teneurs en oxyde de vanadium entraînent un assombrissement de la plaque et par conséquent une faible visibilité de l'affichage, en particulier dans le bleu. De plus faibles teneurs permettent au contraire d'éclaircir la plaque de cuisson.

Afin de bien cacher les éléments chauffants, la plaque selon l'invention peut en outre contenir, notamment en combinaison avec l'oxyde de vanadium, les agents colorants suivants dans les limites pondérales suivantes :

| | |
|---|---|
| Fe2 O3 | 0-1 %, |
| CuO | 0-1 %, |
| MnO | 0-1 %, |

la somme des pourcentages de ces agents colorants étant au moins égale à 0,02 %, de préférence au moins égale à 0,045 % et n'excédant pas 2 %. La plaque de cuisson selon l'invention ne contient toutefois pas d'oxyde de cobalt et de nickel, y compris lorsque la teneur en oxyde de vanadium est comprise entre 0,01 et 0,03%. L'oxyde de chrome (Cr₂O₃) est une impureté fréquemment répandue dans la plupart des matières premières, en particulier les porteurs de titane du type rutile. En outre, certains réfractaires constituant les fours de fusion peuvent contenir de l'oxyde de chrome ou être constitués d'oxyde de chrome. Pour obtenir les propriétés désirées, il est très préférable que la teneur pondérale en oxyde de chrome dans la plaque selon l'invention soit inférieure ou égale à 25 ppm (1 ppm = 0,0001% en poids), notamment 20 ppm et même 15 ppm, voire 10 ppm ou même 5 ppm. Une limitation à des teneurs aussi basses impose de sélectionner soigneusement les matières premières et d'éviter la présence de réfractaires en oxyde de chrome au contact du verre fondu.

La composition chimique de la plaque selon l'invention peut comprendre de l'oxyde d'étain en une teneur pondérale comprise entre 0,1 et 0,5%. L'oxyde d'étain permet en effet de favoriser la réduction du vanadium pendant l'étape de céramisation, ce qui entraîne l'apparition de la couleur. Il aide en outre à affiner le verre-mère pendant la fusion de dernier, c'est-à-dire à favoriser l'élimination des inclusions gazeuses au sein de la masse de verre fondu. D'autres réducteurs que l'étain se sont révélés encore plus efficaces, notamment les sulfures métalliques, comme explicité plus en détail dans la suite du texte. La composition chimique de la plaque de cuisson selon l'invention peut donc être exempte d'oxyde d'étain.

La composition chimique de la plaque selon l'invention est exempte d'antimoine et d'arsenic, pour des raisons environnementales et car ces oxydes se sont révélés non compatibles avec un procédé de formage du type flottage, dans lequel du verre en fusion est déversé sur un bain d'étain fondu.

La vitrocéramique selon l'invention comprend de préférence des cristaux de structure β-quartz au sein d'une phase vitreuse résiduelle. La valeur absolue de son coefficient de dilatation est typiquement inférieure ou égale à 15.10⁻⁷/°C, voire 5.10⁻⁷/°C.

L'invention a également pour objet un procédé d'obtention d'une plaque selon l'invention. Ce procédé comprend une étape de fusion et d'affinage d'un verre-mère, puis une étape de céramisation.

La fusion est réalisée de préférence dans un four de fusion du verre, à l'aide d'au moins un brûleur. Des matières premières (silice, spodumène etc.) sont introduites dans le four et subissent sous l'effet des hautes températures diverses réactions chimiques, telles que des réactions de décarbonatation, de fusion proprement dite...

L'étape d'affinage correspond à l'élimination des inclusions gazeuses emprisonnées dans la masse de verre fondu. L'affinage est généralement réalisé à une température au moins égale à la température de fusion, grâce à la génération de bulles qui vont entraîner vers la surface de la masse de verre fondu les inclusions indésirables.

L'affinage peut notamment être réalisé à l'aide d'oxyde d'étain, introduit sous forme d'oxyde stannique. La réduction à haute température de l'oxyde stannique en oxyde stanneux va générer un fort dégagement d'oxygène à l'origine de l'affinage. L'oxyde stanneux va ensuite servir à réduire l'oxyde de vanadium durant l'étape de céramisation.

L'affinage est de préférence réalisé grâce à l'ajout d'un sulfure métallique. Le sulfure sert également à obtenir un verre-mère réduit, qui lors de la céramisation contribuera à la réduction totale de l'oxyde de vanadium. En cas d'affinage à l'aide d'un sulfure, la composition selon l'invention peut également comprendre de l'oxyde d'étain, en des teneurs indiquées ci avant ; de préférence toutefois, elle n'en contient pas.

Le sulfure métallique est de préférence choisi parmi les sulfures de métal de transition, par exemple le sulfure de zinc, les sulfures de métal alcalin, par exemple le sulfure de potassium, le sulfure de sodium et le sulfure de lithium, les sulfures de métal alcalino-terreux, par exemple le sulfure de calcium, le sulfure de baryum, le sulfure de magnésium et le sulfure de strontium. Les sulfures préférés sont le sulfure de zinc, le sulfure de lithium, le sulfure de baryum, le sulfure de magnésium et le sulfure de strontium. Le sulfure de zinc s'est avéré particulièrement avantageux car il ne contribue pas à colorer le verre ou la vitrocéramique. Il est également privilégié quand la vitrocéramique doit contenir de l'oxyde de zinc : dans ce cas le sulfure de zinc joue un double rôle de réducteur/affinant et de source d'oxyde de zinc.

Le sulfure peut aussi être introduit dans les matières premières vitrifiables sous la forme d'un laitier ou d'une fritte de verre enrichie en sulfure qui présentent l'avantage d'accélérer la digestion des infondus, d'améliorer l'homogénéité chimique du verre et sa qualité optique. Toutefois, il est bien connu que les laitiers contiennent aussi du fer en quantité importante qui réduit la transmission des infrarouges. De ce point de vue, il est préférable d'utiliser des frittes de verre dont la composition chimique, notamment en fer, peut être parfaitement contrôlée.

De préférence le sulfure est ajouté aux matières vitrifiables en une quantité de 0,07 à 2 %, avantageusement inférieure à 1 % et mieux encore comprise entre 0,07 et 0,8 % du poids total des matières vitrifiables. Des teneurs comprises entre 0,3 et 0,7% sont préférées.

Pour jouer pleinement son rôle affinant, le sulfure, notamment le sulfure de zinc, est de préférence associé à un réducteur tel que du coke. La teneur introduite en coke est de préférence comprise entre 800 et 2000 ppm, notamment entre 1200 et 1800 ppm (1 ppm = 0,0001% en masse).

Le sulfure peut également être associé à un agent oxydant, de préférence un sulfate. Les sulfates présentent l'avantage de ne pas former d'espèces colorantes dans le verre ou la vitrocéramique. Le sulfate peut notamment être un sulfate de sodium, de lithium, ou encore de magnésium. Les teneurs en sulfate introduit sont de préférence comprises entre 0,2 et 1% en masse, notamment entre 0,4 et 0,8%, exprimées en SO₃.

La fusion et l'affinage du verre-mère sont de préférence réalisés à des températures inférieures ou égales à 1700°C, notamment 1650°C et même 1600°C.

Après l'étape d'affinage, le verre-mère obtenu est traité dans les conditions habituelles pour la production de vitrocéramique.

Ainsi, le verre est mis en forme, par exemple sous forme d'un ruban dans les conditions du procédé opérant par flottage du verre en fusion sur un bain d'étain fondu, ledit ruban étant ensuite découpé en plaques, ou directement sous forme de plaque par laminage, ou encore être moulé à la forme souhaitée.

Le verre mis en forme subit ensuite un traitement thermique visant à le transformer en vitrocéramique.

Durant l'étape de céramisation, le verre-mère subit un cycle de céramisation comprenant les étapes suivantes :
a) élévation de la température jusqu'au domaine de nucléation, généralement situé au voisinage du domaine de transformation, notamment à 50-80°C par minute,
b) traversée de l'intervalle de nucléation (670-800°C) en une vingtaine de minutes,
c) élévation de la température jusqu'à la température T du palier de céramisation comprise entre 900 et 1000°C en 15 à 30 minutes,
d) maintien de la température T du palier de céramisation pendant une temps t de 10 à 25 minutes,
e) refroidissement rapide jusqu'à la température ambiante.

L'invention a aussi pour objet une table de cuisson comprenant une plaque de cuisson selon l'invention ou obtenue par le procédé selon l'invention, et au moins un élément chauffant, par exemple un foyer radiant ou halogène ou un élément d'induction. La table de cuisson comprend de préférence des afficheurs à base de diodes électroluminescentes, notamment émettant dans le bleu.

L'invention sera mieux comprise à la lumière des exemples non limitatifs qui suivent.

Dans un four chauffé à l'aide de brûleurs oxygène-gaz naturel sont fondus différents verres-mères, présentant les compositions indiquées dans le tableau 1 ci-après. La température de fusion est de l'ordre de 1650°C. Le verre-mère mis en forme de plaque par laminage subit ensuite un traitement de céramisation pour former une vitrocéramique, ce traitement étant opéré selon le cycle comprenant les étapes a) à e) décrit précédemment.

Le tableau indique les teneurs pondérales en oxydes, la teneur éventuelle en coke ou en sulfure de zinc ajoutée au mélange vitrifiable, et la transmission optique à 450 et 500 nm pour une épaisseur de 4 mm.

La composition C1 (exemple comparatif) est une vitrocéramique dont les très faibles transmissions entre 450 et 500 nm entraînent une visibilité presque nulle des diodes électroluminescentes bleues.

Les compositions 1 à 4 sont des exemples selon l'invention.

**Tableau 1**

| | C1 | 1 | 2 | 3 | 4 |
|---|---|---|---|---|---|
| SiO₂ | 67,7 | 64,7 | 64,7 | 64,7 | 64,7 |
| Al₂O₃ | 21,2 | 18,8 | 18,8 | 18,8 | 18,8 |
| Li₂O | 3,5 | 3, 8 | 3,8 | 3, 8 | 3,8 |
| TiO₂ | 2,5 | 3,0 | 3,0 | 3,0 | 3,0 |
| ZrO₂ | 1,8 | 1,4 | 1,4 | 1,4 | 1,4 |
| ZnO | 1,8 | 1,5 | 1,5 | 1,5 | 1,5 |
| MgO | 1,0 | 1,1 | 1,1 | 1,1 | 1,1 |
| CaO | - | 0,4 | 0,4 | 0,4 | 0,4 |
| BaO | - | 2,5 | 2,5 | 2,5 | 2,5 |
| Na₂O | 0,5 | 0,6 | 0,6 | 0,6 | 0,6 |
| K₂O | 0,1 | 0,3 | 0,3 | 0,3 | 0,3 |
| MnO | - | 0,025 | 0,025 | 0,025 | - |
| SnO₂ | 0,22 | 0,25 | 0,25 | 0,25 | 0,25 |
| V₂O₅ | 0,065 | 0,025 | 0,025 | 0,025 | 0,025 |
| | | | | | |
| ZnS | | | | 0,02% | |
| Coke (ppm) | - | - | 400 | - | - |
| | | | | | |
| T (450 nm) | 0,1% | 0,8% | 0,6% | 0,5% | 0,4% |
| T (500 nm) | 0,18% | 1,1% | 0,9% | 0,7% | 0,5% |
| | | | | | |
| Visibilité LED bleues | Non | Bonne | Bonne | Bonne | Bonne |

## Revendications

1. Procédé d'obtention d'une plaque en vitrocéramique du type aluminosilicate de lithium exempte d'arsenic et d'antimoine comprenant une étape de fusion et d'affinage d'un verre-mère, puis une étape de céramisation dudit verre-mère selon un cycle de céramisation comprenant les étapes suivantes :
a) élévation de la température jusqu'au domaine de nucléation, généralement situé au voisinage du domaine de transformation, notamment à 50-80°C par minute,
b) traversée de l'intervalle de nucléation en une vingtaine de minutes,
c) élévation de la température jusqu'à la température T du palier de céramisation comprise entre 900 et 1000°C en 15 à 30 minutes,
d) maintien de la température T du palier de céramisation pendant une temps t de 10 à 25 minutes,
e) refroidissement rapide jusqu'à la température ambiante,
ladite plaque en vitrocéramique présentant une composition chimique comprenant les constituants suivants dans les limites définies ci-après exprimées en pourcentages pondéraux :
| | |
|---|---|
| SiO₂ | 64 - 70 % |
| Al₂O₃ | 18 - 19, 8 % |
| Li₂O | 2,5 - 3,8 |
| K₂O | 0 - <1,0 % |
| Na₂O | 0 - <1, 0 % |
| ZnO | 1,2 - 2,8 % |
| MgO | 0,55 - 1,5 % |
| CaO | 0 - 1 % |
| BaO | 0 - 3 % |
| SrO | 0 - 1,4 % |
| TiO₂ | 1,8 - 3,2 % |
| ZrO₂ | 1,0 - 2,5 % |
| P₂O₅ | 0 - 8 % |
et dont la composition chimique comprend de l'oxyde de vanadium en une teneur pondérale comprise entre 0,01 et 0,03 %,
dont la composition chimique comprend de l'oxyde d'étain en une teneur pondérale comprise entre 0,1 et 0,5%, ou est exempt d'oxyde d'étain,
dont la composition chimique ne contient pas d'oxyde de nickel et de cobalt
et dont la transmission optique pour une épaisseur de 4 mm est comprise entre 0,4 et 1.5% pour au moins une longueur d'onde comprise entre 400 et 500 nm.

2. Procédé selon la revendication précédente, dans lequel l'affinage est réalisé grâce à l'ajout d'un sulfure métallique, notamment de sulfure de zinc.

3. Procédé selon l'une des revendications précédentes, tel que la fusion et l'affinage sont réalisés à des températures inférieures ou égales à 1700°C, notamment 1650 °C.

4. Plaque en vitrocéramique du type aluminosilicate de lithium exempte d'arsenic et d'antimoine susceptible d'être obtenue par un procédé tel que défini selon l'une quelconque des revendications 1 à 3 et dont la composition chimique comprend les constituants suivants dans les limites définies ci-après exprimées en pourcentages pondéraux :
| | |
|---|---|
| SiO₂ | 64 - 70 % |
| Al₂O₃ | 18 - 19,8 % |
| Li₂O | 2,5 - 3,8 % |
| K₂O | 0 - <1,0 % |
| Na₂O | 0 - <1,0 % |
| ZnO | 1,2 - 2,8 % |
| MgO | 0,55 - 1,5 % |
| CaO | 0 - 1 % |
| BaO | 0 - 3 % |
| SrO | 0 - 1,4 % |
| TiO₂ | 1,8 - 3,2 % |
| ZrO₂ | 1,0 - 2,5 % |
| P₂O₅ | 0 - 8 % |
et dont la composition chimique comprend de l'oxyde de vanadium en une teneur pondérale comprise entre 0,01 et 0,03 %,
dont la composition chimique comprend de l'oxyde d'étain en une teneur pondérale comprise entre 0,1 et 0,5%, ou est exempt d'oxyde d'étain,
dont la composition chimique ne contient pas d'oxyde de nickel et de cobalt
et dont la transmission optique pour une épaisseur de 4 mm est comprise entre 0,4 et 1.5% pour au moins une longueur d'onde comprise entre 400 et 500 nm.

5. Plaque selon la revendication 4, telle que la teneur pondérale en oxyde de chrome est inférieure ou égale à 25 ppm, notamment 20 ppm.

6. Table de cuisson comprenant une plaque de cuisson selon l'une des revendications 4 ou 5 ou susceptible d'être obtenue selon l'une des revendications 1 à 3, et au moins un élément chauffant.

## Patentansprüche

1. Verfahren zum Erhalten einer Glaskeramikplatte vom Typ Lithium-Aluminosilicat, frei von Arsen und Antimon, umfassend einen Schritt des Schmelzens und Läuterns eines Mutterglases, anschließend einen Schritt des Keramisierens des Mutterglases gemäß einem Keramisierungszyklus, umfassend die folgenden Schritte:
a) Erhöhung der Temperatur bis zum Keimbildungsbereich, der im Allgemeinen in der Nähe des Umwandlungsbereichs liegt, insbesondere mit 50-80 °C pro Minute,
b) Durchlaufen des Keimbildungsintervalls innerhalb von etwa zwanzig Minuten,
c) Erhöhung der Temperatur bis zu der Temperatur T der Keramisierungsstufe zwischen 900 und 1000 °C innerhalb von 15 bis 30 Minuten,
d) Halten der Temperatur T der Keramisierungsstufe während einer Zeit t von 10 bis 25 Minuten,
e) schnelles Abkühlen auf Raumtemperatur, wobei die Glaskeramikplatte eine chemische Zusammensetzung aufweist, die folgende Bestandteile in den nachstehend definierten Grenzen, ausgedrückt in Gewichtsprozentsätzen, umfasst:
| | |
|---|---|
| SiO₂ | 64 - 70 % |
| Al₂O₃ | 18-19,8% |
| Li₂O | 2,5 - 3,8 % |
| K₂O | 0 - < 1,0 % |
| Na₂O | 0 - < 1,0 % |
| ZnO | 1,2 - 2,8 % |
| MgO | 0,55 - 1,5 % |
| CaO | 0-1 % |
| BaO | 0-3% |
| SrO | 0-1,4% |
| TiO₂ | 1,8 - 3,2 % |
| ZrO₂ | 1,0 - 2,5 % |
| P₂O₅ | 0-8 % |
und deren chemische Zusammensetzung Vanadiumoxid in einem Gewichtsanteil zwischen 0,01 und 0,03 % umfasst und deren optische Durchlässigkeit bei einer Dicke von 4 mm für mindestens eine Wellenlänge zwischen 400 und 500 nm zwischen 0,4 und 1,5 % liegt
deren chemische Zusammensetzung Zinnoxid in einem Gewichtsanteil zwischen 0,1 und 0,5 % umfasst,
deren chemische Zusammensetzung kein Nickel- und Kobaltoxid enthält.

2. Verfahren nach dem vorstehenden Anspruch, wobei das Läutern durch die Zugabe eines Metallsulfids, insbesondere Zinksulfid, durchgeführt wird.

3. Verfahren nach einem der vorstehenden Ansprüche, wobei das Schmelzen und Läutern bei Temperaturen kleiner oder gleich 1700 °C, insbesondere 1650 °C, durchgeführt werden.

4. Glaskeramikplatte vom Typ Lithium-Aluminosilicat, frei von Arsen und Antimon, die durch ein Verfahren wie nach einem der Ansprüche 1 bis 3 erhalten werden kann und deren chemische Zusammensetzung folgende Bestandteile in den nachstehend definierten Grenzen, ausgedrückt in Gewichtsprozentsätzen, umfasst:
| | |
|---|---|
| SiO₂ | 64 - 70 % |
| Al₂O₃ | 18-19,8% |
| Li₂O | 2,5 - 3,8 % |
| K₂O | 0 - < 1,0 % |
| Na₂O | 0 - < 1,0 % |
| ZnO | 1,2 - 2,8 % |
| MgO | 0,55 - 1,5 % |
| CaO | 0-1 % |
| BaO | 0-3% |
| SrO | 0-1,4% |
| TiO₂ | 1,8 - 3,2 % |
| ZrO₂ | 1,0 - 2,5 %. |
| P₂O₅ | 0 - 8 % |
und deren chemische Zusammensetzung Vanadiumoxid in einem Gewichtsanteil zwischen 0,01 und 0,03 % umfasst und deren optische Durchlässigkeit bei einer Dicke von 4 mm für mindestens eine Wellenlänge zwischen 400 und 500 nm zwischen 0,4 und 1,5 % liegt,
deren chemische Zusammensetzung Zinnoxid in einem Gewichtsanteil zwischen 0,1 und 0,5 % umfasst,
deren chemische Zusammensetzung kein Nickel- und Kobaltoxid enthält.

5. Platte nach Ansprüche 4, wobei der Gewichtsanteil von Chromoxid kleiner oder gleich 25 ppm, insbesondere 20 ppm, ist.

6. Kochfeld, umfassend eine Kochplatte nach einem der Ansprüche 4 oder 5, oder die nach einem der Ansprüche 1 bis 3 erhalten werden kann, und mindestens ein Heizelement.

## Claims

1. A process for obtaining a glass-ceramic plate of lithium aluminosilicate type free of arsenic and of antimony, comprising a step of melting and of refining a mother glass, then a ceramization step of said mother glass according to a ceramization cycle comprising the following steps:
a) raising the temperature to the nucleation range, generally located close to the conversion range, especially at 50-80°C per minute;
b) passing through the nucleation range in around twenty minutes;
c) raising the temperature to the temperature T of the ceramization plateau between 900 and 1000°C in 15 to 30 minutes;
d) maintaining the temperature T of the ceramization plateau for a time t of 10 to 25 minutes; and
e) rapid cooling down to ambient temperature;
said glass-ceramic plate having a chemical composition comprising the following constituents within the limits defined below, which are expressed as percentages by weight:
| | |
|---|---|
| SiO₂ | 64 - 70% |
| Al₂O₃ | 18 - 19.8% |
| Li₂O | 2.5 - 3.8% |
| K₂O | 0 - <1.0% |
| Na₂O | 0 - <1.0% |
| ZnO | 1.2 - 2.8% |
| MgO | 0.55 - 1.5% |
| CaO | 0 - 1% |
| BaO | 0 - 3% |
| SrO | 0 - 1.4% |
| TiO₂ | 1.8 - 3.2% |
| ZrO₂ | 1.0 - 2.5% |
| P₂O₅ | 0 - 8%; |
and said chemical composition comprising vanadium oxide in a weight content between 0.01 and 0.03%, and the optical transmission of which, for a thickness of 4 mm, is between 0.4 and 1.5% for at least one wavelength between 400 and 500 nm,
said chemical composition comprises tin oxide in a weight content between 0.1 and 0.5%,
Said chemical composition does not contain nickel oxide and cobalt oxide.

2. The process as claimed in the preceding claim, in which the refining is carried out by virtue of the addition of a metal sulfide, in particular of zinc sulfide.

3. The process as claimed in one of the preceding process claims, such that the melting and the refining are carried out at temperatures less than or equal to 1700°C, in particular 1650°C.

4. A glass-ceramic plate of lithium aluminosilicate type free of arsenic and of antimony obtainable by the process according to any one of claims 1 to 3 and having a chemical composition comprising the following constituents within the limits defined below, which are expressed as percentages by weight:
| | |
|---|---|
| SiO₂ | 64 - 70% |
| Al₂O₃ | 18 - 19.8% |
| Li₂O | 2.5 - 3.8% |
| K₂O | 0 - <1.0% |
| Na₂O | 0 - <1.0% |
| ZnO | 1.2 - 2.8% |
| MgO | 0.55 - 1.5% |
| CaO | 0 - 1% |
| BaO | 0 - 3% |
| SrO | 0 - 1.4% |
| TiO₂ | 1.8 - 3.2% |
| ZrO₂ | 1.0 - 2.5% |
| P₂O₅ | 0 - 8%; |
and said chemical composition comprising vanadium oxide in a weight content between 0.01 and 0.03%, and the optical transmission of which, for a thickness of 4 mm, is between 0.4 and 1.5% for at least one wavelength between 400 and 500 nm,
said chemical composition comprises tin oxide in a weight content between 0.1 and 0.5%,
Said chemical composition does not contain nickel oxide and cobalt oxide.

5. The plate as claimed in claim 4, such that the weight content of chromium oxide is less than or equal to 25 ppm, in particular 20 ppm.

6. A cooktop comprising a cooking plate as claimed in one of claims 4 or 5 or obtained as claimed in one of claims 1 to 3, and at least one heating element.
